# EUROPEAN PATENT APPLICATION

(11) **EP 1 760 576 A2**
(43) Date of publication of application: **07.03.2007**
(21) Application number: 06119005.4
(22) Date of filing: 16.08.2006
(51) Int. Cl.: G06F 3/048

(54) **Method and apparatus of displaying information bar in a mobile communication terminal**

(30) Priority: 31.08.2005 KR 20050080498
(71) Applicant: Samsung Electronics Co., Ltd., Suwon-si, Gyeonggi-Do (KR)
(72) Inventor: Um, Tae-Won, Seoul (KR); Kim, Kyu-Sung, Seoul (KR); Hwang, Byeong-Cheol, Seoul (KR); Oh, Jung-Yeob, Gyeonggi-do (KR)
(74) Representative: Grünecker, Kinkeldey, Stockmair & Schwanhäusser Anwaltssozietät

(57) **Abstract**

An information bar displaying method in a mobile communication terminal is provided. Upon detection of activating of the mobile communication terminal, an information bar representing a user-preset initial information group is displayed on an idle mode screen. Upon detection of input of a first key for movement between information groups, another information group corresponding to the first key is displayed in the information bar. Upon detection of input of a second key for movement to a menu item, at least one menu item within the displayed information group is displayed in the information bar. Upon detection of input of a third key for information selection, a program corresponding to the third key is activated.

## Description

The present invention relates generally to a mobile communication terminal, and in particular, to a method and apparatus of displaying an information bar in a mobile communication terminal.

Due to the portability of mobile communication terminals and the resulting widespread use of them, service providers and terminal manufacturers have been developing more convenient and special features to attract more users. For example, a mobile communication terminal is now equipped with the functions of a phonebook, games, a scheduler, a Short Message Service (SMS), the Internet, e-mail, morning call, MPEG Layer 3 (MP3) players and a digital camera.

Typically upon power-on, the mobile communication terminal displays its phone number, date, time, and a simple operator logo on an initial screen. Along with the recent improvement of the Liquid Crystal Display (LCD) driver of a display and the increasing user demand for customizing their initial screens, content providers as well as terminal manufacturers have enabled a variety of initial screens. Therefore, a user can set an initial screen freely by selecting information to be displayed and its position on the initial screen.

However, as the mobile communication terminal is equipped with more and more functions and the resulting increasing information is all displayed on a small initial screen, information visibility or utilization is impaired. For example, when a captured or downloaded image is displayed on the initial screen, displaying a large amount of information may cover an important part of a background image or lose its visibility due to the color of the background image.

An object of the present invention is to substantially solve at least the above problems and/or disadvantages and to provide at least the advantages below. Accordingly, the object of the present invention is to provide an information bar displaying technique for efficiently utilizing an initial screen in a mobile communication terminal.

This object is solved by the subject matter of the independent claims.

Preferred embodiments are defined in the dependent claims.

Another aspect of the present invention is to provide a user interface for efficiently displaying various pieces of information by improving an existing method of displaying information via an initial screen interface and for allowing a user to fast access a selected function in a mobile communication terminal.

The above aspects are achieved by providing an information bar displaying method in a mobile communication terminal.

According to one aspect of the present invention, in an information bar displaying method in a mobile communication terminal, upon detection of the activating of the mobile communication terminal" an information bar representing a user-preset initial information group is displayed on an idle mode screen. Upon detection of input of a first key for movement between information groups, another information group corresponding to the first key is displayed in the information bar. Upon detection of input of a second key for movement to a menu item, at least one menu item within the displayed information group is displayed in the information bar. Upon detection of input of a third key for information selection, a program corresponding to the third key is activated.

According to another aspect of the present invention, in an information bar displaying method in a mobile communication terminal, upon detection of the activating of the mobile communication terminal, an information bar representing a user-preset initial information group is displayed on an idle mode screen. Upon detection of input of a first key for movement between information groups, a pop-up window with a list of the other information groups is displayed on the idle-mode screen and another information group corresponding to the first key is moved to. Upon detection of input of a second key for movement to a menu item, a menu item within the displayed information group is moved to. Upon detection of input of a third key for information selection, a program corresponding to the third key is activated.

According to still another aspect of the present invention, a mobile communication terminal for displaying an information bar comprises a memory for storing information groups, a controller for detecting the activating of the mobile communication terminal, outputting an information bar representing a user-preset initial information group on a screen, detecting an input of a key for selecting information within the displayed information group and activating a program for the selected information and displaying means for displaying the information bar and the information group is provided.

According to still another aspect of the present invention, a mobile communication terminal for displaying an information comprises a memory for storing information groups, a controller for detecting the activating of the mobile communication terminal, outputting an information bar representing a user-preset initial information group on a screen, detecting an input of a key for movement between information groups, a pop-up window with a list of the other information groups on a screen, moving to another information group corresponding to the key, detecting input of a second key for information selection and activating a program corresponding to the second key and displaying means for displaying the information bar and the information group.

The above and other objects, features and advantages of the present invention will become more apparent from the following detailed description when taken in conjunction with the accompanying drawings in which:
FIG. 1 is a block diagram of a mobile communication terminal according to the present invention;
FIG. 2 is a flowchart illustrating a method of displaying a simple-type information bar according to the present invention;
FIG. 3 is a flowchart illustrating a method of displaying a pop-up-type information bar according to the present invention;
FIG. 4 illustrates exemplary displays of a simple-type information bar according to the present invention; and
FIG. 5 illustrates exemplary displays of a pop-up-type information bar according to the present invention.

Preferred embodiments of the present invention will be described herein below with reference to the accompanying drawings. In the following description, well-known functions or constructions are not described in detail since they would obscure the invention in unnecessary detail.

The present invention is intended to provide an information bar displaying method for efficient utilization of an initial screen in a mobile communication system.

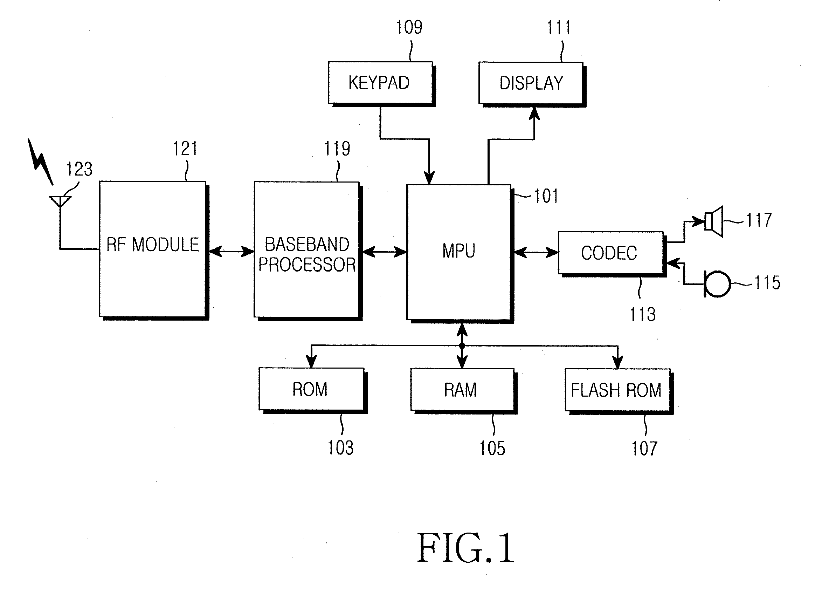

FIG. 1 is a block diagram of a mobile communication terminal according to the present invention. The mobile communication terminal can be, for example, any of a cellular phone, a Personal Communication System (PCS) terminal, a Personal Data Assistant (PDA), or an International Mobile Telecommunication 2000 (IMT 2000) terminal. The following description is made in the context of a typical configuration of the mobile communication terminal.

Referring to FIG. 1, a Micro-Processor Unit (MPU), acting as a controller, 101 provides overall control to the mobile communication terminal. Specifically, it processes and controls voice and data communications. In addition to the typical functionalities, the MPU 101 controls display of an information bar in order to efficiently utilize an initial screen according to the present invention.

A Read Only Memory (ROM) 103 stores the microcodes of programs used for processing and control of the MPU 101, and reference data. Particularly, the ROM 103 stores a program for displaying an information bar in order to efficiently utilize an initial screen according to the present invention. A Random Access Memory (RAM) 105 serves as a working memory for the MPU 101, for temporarily storing data generated during execution of each program. A flash ROM 107 stores updatable data to be stored.

A keypad 109 is provided with alphanumerical keys, and function keys including Menu, Cancel (Clear), Talk, End, OK, Internet, and navigation (or directional) keys (▲/▼/◄/►). It provides key input data corresponding to a user-pressed key to the MPU 101. A display 111 displays status information created during the operation of the mobile communication terminal, a limited number of characters, moving pictures, or still images. The display 111 may be an LCD.

A Coder-Decoder (CODEC) 113 connected to the MPU 101, and a speaker 117 and a microphone 115 which are connected to the CODEC 113 collectively form a voice input/output block for voice call and voice recording. The CODEC 113 converts digital data received from the MPU 101 to an analog voice signal and outputs the analog voice signal through the speaker 117. Also, the CODEC 113 converts a voice signal received through the microphone 115 to digital data and provides the digital data to the MPU 101.

A Radio Frequency (RF) module 121 downconverts an RF signal received through an antenna 123 to a baseband signal and provides the baseband signal to a baseband processor 119. The RF module 121 also upconverts a baseband signal received from the baseband processor 119 to an RF signal and sends the RF signal through the antenna 123. The baseband processor 119 processes a baseband signal transmitted/received between the RF module 121 and the MPU 101. For example, the baseband processor 123 channel-encodes and spreads data during transmission and despreads and channel-decodes a signal during reception.

In accordance with the present invention, two types of information bars are available: a simple-type and a pop-up type. A user may select information to be displayed in an information bar from a separately procured screen. When various types of information bars are available, the user may select an intended information bar type. Also, the user may set a position at which to display the selected information or the information bar.

Here, a mobile communication terminal for displaying an information bar comprises a memory which is ROM for storing information groups, a controller for detecting the activating of the mobile communication terminal, outputting an information bar representing a user-preset initial information group on a screen, detecting an input of a key for selecting information within the displayed information group and activating a program for the selected information and a display for displaying the information bar and the information group. The controller further performs, after the step of outputting an information bar, the step of detecting of input of a second key for movement between information groups, outputting another information group corresponding to the second key in the information bar, detecting of input of a third key for movement to a menu item and outputting in the information bar at least one menu item within the outputted information group. The at least one menu is displayed in a pop-up window. Here, the key may be OK key. The second key may be one of up, down, left and right keys and third key may be one of up, down, left and right keys.

Also, a mobile communication terminal, as another embodiment, for displaying an information bar comprises a memory for storing information groups, a controller for detecting the activating of the mobile communication terminal, outputting an information bar representing a user-preset initial information group on a screen, detecting an input of a key for movement between information groups, a pop-up window with a list of the other information groups on a screen, moving to another information group corresponding to the key, detecting input of a second key for information selection and activating a program corresponding to the second key and a display for displaying the information bar and the information group. The controller may further perform, after the step of moving to another information group, the step of moving, upon detection of input of a third key for movement to a menu item, to the menu item within the outputted information group. The key may be one of up, down, left and right keys and the third key may be one of up, down, left and right keys. The controller may further perform the step of terminating the displaying of the pop-up window, when moving to the initial information group.

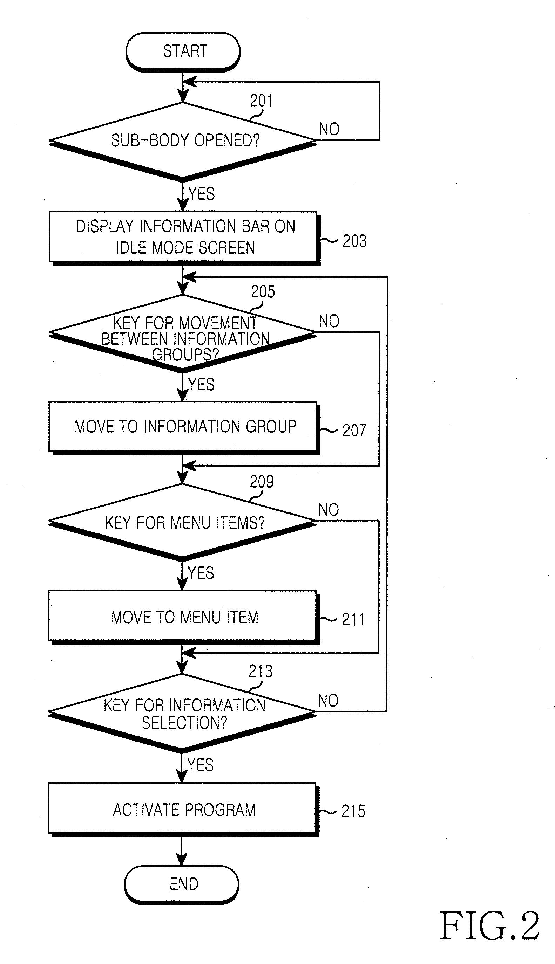

FIG. 2 is a flowchart illustrating a method of displaying a simple-type information bar according to the present invention.

Referring to FIG. 2, the MPU 101 monitors the opening of a sub-body for activating a mobile communication terminal in step 201. Here, a folder or flip type mobile communication terminal in which the opening of a sub-body activates the mobile communication terminal is described. Thus, step 201 generally means a step of monitoring an activation of the mobile communication terminal. Therefore, if the mobile communication terminal is a bar type terminal, touching an element in a touch screen or pressuring a key button in a key pad for activating the mobile communication terminal may correspond to step 201.

Upon detection of the opening of the sub-body, generally upon detection of the activating of the mobile communication terminal, the MPU 101 displays user-preset information in the form of an information bar on an initial screen in step 203. The information represented by the information bar may be the first information group, i.e. the first of user-preset categorized menus. For example, when information groups available for representation by information bars are song title, Short Message Service (SMS)/Multimedia Message Service (MMS)/e-mail, missed call, schedule, and move to folder, the first information group, i.e. music (song title) is displayed in an information bar on the initial screen. The MPU 101 marks the first information group with a block to thereby indicate the selection status of the information group.

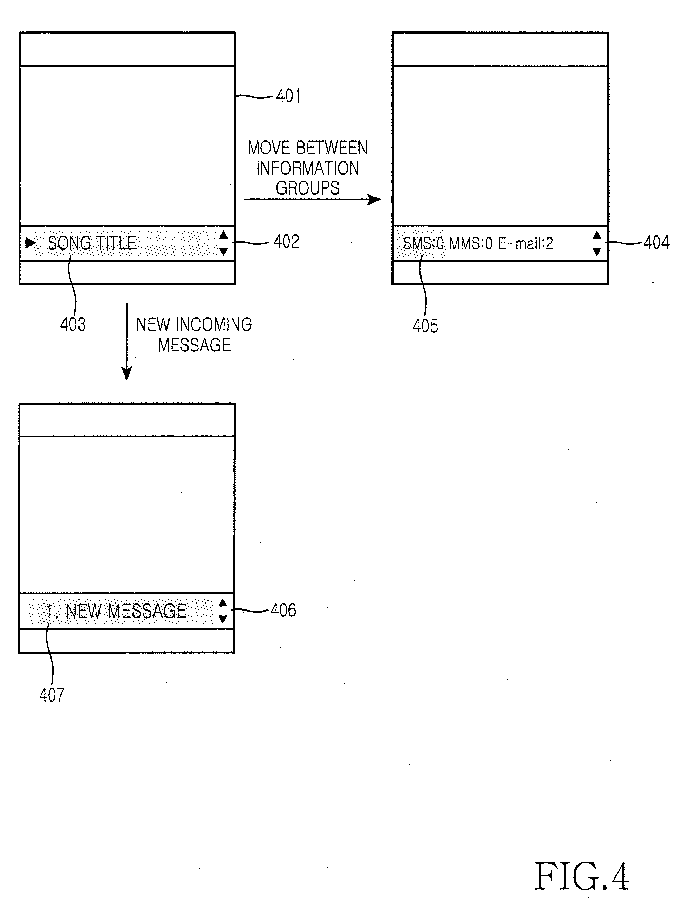

Referring to FIG. 4, the MPU 101 displays a user-preset information group in an information bar 402 at the bottom of an initial screen 401. The information bar 402 represents music (song title) as the first information group and is block-marked to indicate its selection status. The information bar 402 includes up/down keys and left/right keys. The user can move between information groups using the up/down keys and go into menu items by the left/right keys. The user can move to the second information group by scrolling up/down keys(404), i.e. a message group having numbers of missed SMS messages, MMS messages, and e-mails messages as menu items by selecting the up key. The message group is displayed in the information bar and one of the menu items of the message group, for example, SMS is block-marked (405). When a new message arrives, "new message" (407) is displayed. Here, The user can move to the another information group by scrolling up/down keys (406).

In step 205, the MPU 101 determines whether a key for movement between information groups, for example, the up or down key, has been entered. If there is no key input for movement between information groups, the MPU 101 determines whether a key for menu items has been selected in step 209. On the other hand, upon input of the key for movement between information groups, the MPU 101 moves to a selected information group and displays it in the information bar in step 207. Referring to FIG. 4, the user can move to the second information group, i.e. a message group having numbers of missed SMS messages, MMS messages, and e-mails messages as menu items by selecting the up key. The message group is displayed in the information bar and one of the menu items of the message group, for example, SMS is block-marked to thereby indicate that the user may move to another menu item.

In step 209, the MPU 101 monitors key input for movement between the menu items or to a menu item. The key input may be created by the left/right keys. If there is no key input for movement between the menu items or to a menu item, the MPU 101 monitors key input for information selection in step 213. On the other hand, upon input of the key for movement to a menu item, the MPU 101 moves to one or more menu items in the corresponding information group and displays them in the information bar in step 211. The menu items are block-marked to indicate their selection status. When two or more menu items are displayed, one of them, for example, the first menu item, is block-marked and by selecting the key for movement between the menu items, the user moves from the first menu item to another menu item. For example, with the first song title displayed for music as an information group, the previous or next song title can be displayed by moving to another menu item. If the information group is a message group as illustrated in FIG. 4, the MMS or e-mail can be selected within the message group by the right key.

In step 213, the MPU 101 monitors key input for information selection. An OK key can be used for information selection. If there is no key input for information selection, the MPU 101 returns to step 205. On the other hand, upon the key input for information selection, the MPU 101 activates a program for the corresponding information group in step 215. In the case of SMS, an SMS program is activated. In the case of music, a selected song is played or paused. Then the MPU 101 ends the algorithm of the present invention.

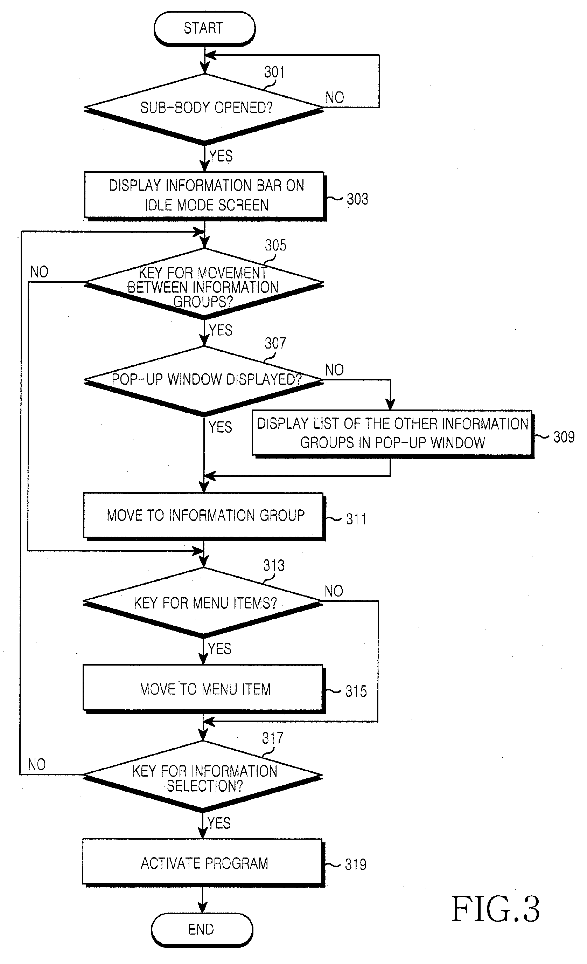

FIG. 3 is a flowchart illustrating a method of displaying a pop-up-type information bar according to the present invention.

Referring to FIG. 3, the MPU 101 monitors the opening of the sub-body for activating a mobile communication terminal in step 301. Upon detection of the opening of the sub-body, generally upon detection of the activating of the mobile communication terminal, the MPU 101 displays user-preset information in the form of an information bar on an initial screen in step 303. The information represented in the information bar may be the first information group, i.e. the first of user-preset categorized menus. For example, when information groups available for representation by information bars are song title, Short Message Service (SMS)/Multimedia Message Service (MMS)/e-mail, missed call, schedule, or move to folder, the first information group, i.e. music (song title), is displayed in an information bar on the initial screen. The MPU 101 marks the first information group with a block to thereby indicate the selection status of the information group.

In step 305, the MPU 101 determines whether a key for movement between information groups, for example, the up or down key has been pressed. If there is no key input for movement between information groups, the MPU 101 determines whether a key for menu items has been selected in step 313. On the other hand, upon input of the key for movement between information groups, the MPU 101 determines whether a pop-up window is invoked and displays a list of the other information groups except for the first information group in step 307. If the pop-up window is not displayed, the MPU 101 invokes the pop-up window with the list in step 309 and moves to the next information group, i.e. the second information group in step 311. If the pop-up window is displayed in step 307, the MPU 101 directly moves to the next information group in step 311. Upon input of a key for selecting a particular information group, the pop-up window is closed.

In step 313, the MPU 101 monitors key input for movement between the menu items or to a menu item. The key input may be created by the left/right keys. If there is no key input for movement between the menu items or to a menu item, the MPU 101 monitors key input for information selection in step 317. On the other hand, upon input of the key for movement between the menu items or to a menu item, the MPU 101 moves to one or more menu items in the corresponding information group and displays them by the information bar in step 315. The menu items are block-marked to indicate their selection status. When two or more menu items are displayed, one of them, for example, the first menu item, is block-marked and by selecting the key for movement between the menu items, the user moves from the first menu item to another menu item.

In step 317, the MPU 101 monitors key input for information selection. An OK key can be used for information selection. If there is no key input for information selection, the MPU 101 returns to step 305. On the other hand, upon the key input for information selection, the MPU 101 activates a program for the corresponding information group in step 319. Then the MPU 101 ends the algorithm of the present invention.

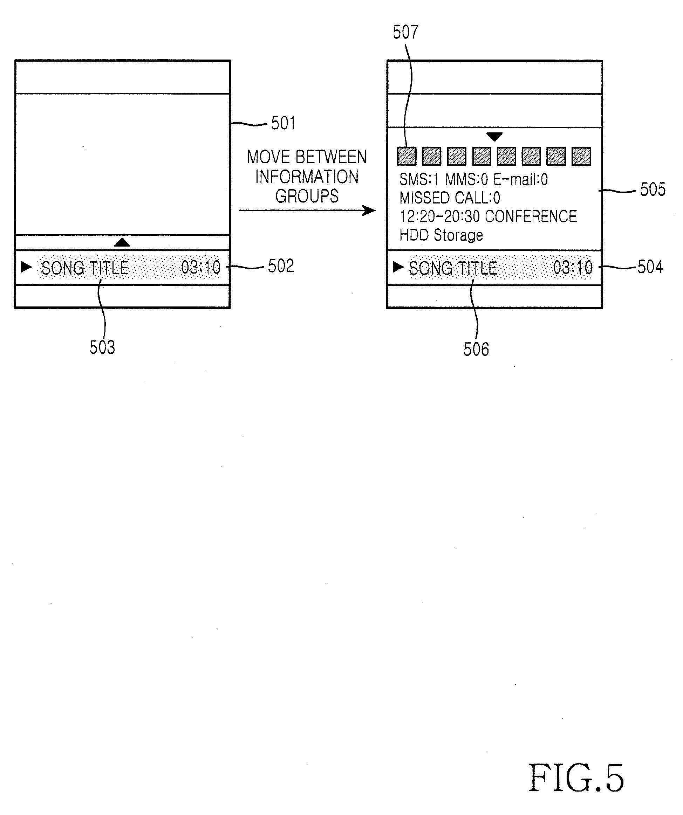

Referring to FIG. 5, the MPU, acting as a controller, 101 displays a user-preset information group, for example, the first user-preset group in a pop-up-type information bar 502 at the bottom of an initial screen 501. The first information group is block-marked as indicated by reference numeral 503, to indicate its selection status. Upon input of the up key, the MPU 101 invokes a pop-up window 505 with the other information groups except for the selected first information group represented as the information bar 504. Here, the selected first information group is block-marked 506. The other information groups may include move to a folder such as HDD (Hard Disc Drive) or storage, the first schedule to come, the number of missed calls, and a message group with the numbers of unread SMS messages, SMS messages and e-mails as menu items. The user may move between information groups by the up/down key and between menu items within the message information group by the left/right key. In the illustrated case of FIG. 5, squares 507 denote application icons. The latest program icon is shown as the leftmost square 507, and the previous used program icons follow it. The pop-up window 505 disappears automatically at a user-predetermined time later. When a particular program is activated, the pop-up window 505 may disappear automatically.

During the procedures shown in FIGs. 2 and 3, meanwhile, when a new message arrives, "new message" is notified to alert the user to the new incoming message as illustrated in FIG. 4 even though other information selected by the user's key manipulation is displayed in the information bar.

In accordance with the present invention as described above, the mobile communication terminal displays a lot of information in an information bar on an initial screen (a normal screen or an idle mode screen), thereby enabling efficient utilization of the remaining space. Since the mobile communication terminal is so configured as to basically display one information bar, the user can view his selected important information group without an additional input. Also, new information can be provided to the user with efficient utilization of a small screen and fast program control is enabled without direct invocation of a program.

While the invention has been shown and described with reference to certain preferred embodiments thereof, it will be understood by those skilled in the art that various changes in form and details may be made therein without departing from the scope of the invention as defined by the appended claims.

## Claims

1. An information bar displaying method in a mobile communication terminal, comprising the steps of:
displaying an information bar representing a user-preset initial information group on a screen, upon detection of the activating of the mobile communication terminal; and
activating, upon detection of input of a key for selecting information within the displayed information group, a program corresponding to the key.

2. The information bar displaying method of claim 1, further comprising, after the step of displaying an information bar, the step of:
displaying in the information bar, upon detection of input of a second key for movement between information groups, another information group corresponding to the second key; and
displaying in the information bar, upon detection of input of a third key for movement to a menu item, at least one menu item within the displayed information group.

3. The information bar displaying method of claim 2, wherein the at least one menu is displayed in a pop-up window.

4. The information bar displaying method of claim 2 or 3, wherein the second key is one of up, down, left and right keys and third key is one of up, down, left and right keys.

5. The information bar displaying method of one of claims 1 to 4, wherein the key is an OK key.

6. The information bar displaying method of claim 1, further comprising the step of:
displaying, upon detection of input of a first movement key for movement between information groups, a pop-up window with a list of the other information groups on the screen and moving to another information group corresponding to the first movement key.

7. The information bar displaying method of claim 6, after the step of moving to another information group, further comprising the step of moving, upon detection of input of a second movement key for movement to a menu item, to the menu item within the displayed information group.

8. The information bar displaying method of claim 6 or 7, wherein the first movement key is one of up, down, left and right keys and the second movement key is one of up, down, left and right keys.

9. The information bar displaying method of one of claims 6 to 8, further comprising terminating the displaying of the pop-up window, when moving to the initial information group.

10. A mobile communication terminal for displaying an information bar, comprising:
a memory for storing information groups;
a controller for detecting the activating of the mobile communication terminal, outputting an information bar representing a user-preset initial information group on a screen, detecting an input of a key for selecting information within the displayed information group and activating a program for the selected information; and
displaying means for displaying the information bar and the information group.

11. The mobile communication terminal of claim 10, wherein the controller is adapted to further perform, after the step of outputting an information bar, the steps of
detecting of input of a second key for movement between information groups;
outputting another information group corresponding to the second key in the information bar;
detecting of input of a third key for movement to a menu item; and
outputting in the information bar at least one menu item within the outputted information group.

12. The mobile communication terminal of claim 11, arranged to display the at least one menu in a pop-up window.

13. The mobile communication terminal of claim 11 or 12, wherein the second key is one of up, down, left and right keys and third key is one of up, down, left and right keys.

14. The mobile communication terminal of one of claims 10 to 13, wherein the key is an OK key.

15. The mobile communication terminal of claim 10, wherein the controller is adapted to detect an input of a key for movement between information groups, display a pop-up window with a list of the other information groups on a screen, move to another information group corresponding to the key, detect input of the information selection key and activate the program corresponding to the information selection.

16. The mobile communication terminal of claim 15, wherein the controller is further arranged to perform, after moving to another information group, the step of moving, upon detection of input of a key for movement to a menu item, to the menu item within the outputted information group.

17. The mobile communication terminal of claim 16, wherein the key for movement between information groups is one of up, down, left and right keys and the key for movement to a menu item is one of up, down, left and right keys. keys.

18. The mobile communication terminal of one of claims 15 to 17, wherein the controller is further arranged to perform the step of terminating the displaying of the pop-up window, when moving to the initial information group.
